(19) Europäisches Patentamt
European Patent Office
Office européen des brevets

(11) **EP 2 459 974 B1**

## (12) EUROPÄISCHE PATENTSCHRIFT

(45) Veröffentlichungstag und Bekanntmachung des Hinweises auf die Patenterteilung:
**25.06.2014 Patentblatt 2014/26**

(21) Anmeldenummer: **10752713.7**

(22) Anmeldetag: **21.07.2010**

(51) Int Cl.:
*G01F 23/26* (2006.01)     *G01F 25/00* (2006.01)

(86) Internationale Anmeldenummer:
**PCT/DE2010/000853**

(87) Internationale Veröffentlichungsnummer:
**WO 2011/012110 (03.02.2011 Gazette 2011/05)**

(54) **VORRICHTUNG UND VERFAHREN ZUR BESTIMMUNG EINER PHYSIKALISCHEN GRÖSSE EINES KAPAZITIVEN NÄHERUNGSSCHALTERS**

DEVICE AND METHOD FOR DETERMINING A PHYSICAL QUANTITY OF A CAPACITIVE PROXIMITY SWITCH

DISPOSITIF ET PRODÉDÉ POUR LA DÉTERMINATION D'UNE QUANTITÉ PHYSIQUE D'UN DÉTECTEUR DE PROXIMITÉ CAPACITIF

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.07.2009 DE 102009035675**

(43) Veröffentlichungstag der Anmeldung:
**06.06.2012 Patentblatt 2012/23**

(73) Patentinhaber: **Balluff GmbH
73765 Neuhausen a.d.F. (DE)**

(72) Erfinder: **WINKENS, Frank
67067 Ludwigshafen (DE)**

(74) Vertreter: **Jakelski & Althoff
Mollenbachstraße 37
71229 Leonberg (DE)**

(56) Entgegenhaltungen:
**DE-A1- 10 250 523     DE-A1-102005 057 558**

EP 2 459 974 B1

**Beschreibung**

Die Erfindung betrifft eine Vorrichtung und ein Verfahren zur Bestimmung einer physikalischen Größe nach dem Oberbegriff der unabhängigen Ansprüche 1 und 8.

Kapazitive Näherungsschalter sind seit Ende der 1960er Jahre bekannt. Sie arbeiten nach dem Grundprinzip der Beeinflussung eines elektrischen Feldes. Basis ist das Prinzip des geometrisch "aufgeweiteten" Plattenkondensators mit einem elektrischen Feld zwischen einer aktiven Messelektrode in Form einer Platte und der Erde bzw. Masse, welche die andere "Platte" darstellt. Gelangt ein Objekt oder Medium mit einer Dielektrizitätskonstante größer als 1 in den Bereich dieses elektrischen Feldes, wird eine entsprechende Kapazitätserhöhung des Plattenkondensators hervorgerufen. Überschreitet der Kapazitätswert einen am Näherungsschalter voreingestellten Schwellenwert, so löst dieser ein Schaltsignal aus. Dies kann beispielsweise durch einen Gegenstand hervorgerufen werden, der in den "aktiven" Bereich des Feldes gelangt (Distanzsensorik) oder das Schaltereignis kann ausgelöst werden durch das Erreichen eines Füllstandes eines Mediums in einem Behälter dann, wenn der Füllstand die Position eines an einer Behälterwand angeordneten kapazitiven Sensors erreicht hat (Füllstandssensorik).

Verfahren zur Erfassung der Kapazität bzw. einer Kapazitätsänderung sind seit langem bekannt. Ein solches Verfahren geht beispielsweise aus der DE 102 50 523 A1 hervor. Ein solches Verfahren kann auch in einem kapazitiven Füllstandsmessgerät zur Bestimmung des Füllstandes eines Mediums in einem Behälter verwendet werden.

Die Messung von Grenzfüllständen ist ein wesentliches Einsatzgebiet kapazitiver Näherungsschalter. Kapazitive Näherungsschalter sind in der Lage, flüssige, granulat- oder pulverförmige Medien ohne direkte Berührung von außen durch nichtmetallische Behälterwände hindurch zu erfassen. Daneben gibt es auch Anwendungen, in denen der kapazitive Sensor in Kontakt mit den zu erfassenden Medien kommt, indem beispielsweise sein aktiver Bereich in das Medium eintaucht.

Hinsichtlich der kapazitiven Erkennung von Medien sind in Bezug auf die physikalische Wirkungsweise grundsätzlich zwei Arten von Medien zu unterscheiden. Zum einen existieren nicht elektrisch leitfähige Medien (Isolatoren), z.B. Fette, Öle, Kunststoffgranulat und dergleichen, zum anderen existieren leitfähige Medien, wie Wasser, Säuren, Laugen, Blut, Chlorverbindungen und dergleichen.

Isolatoren bewirken lediglich eine Erhöhung des Gesamt-Dielektrikums, indem sie einen Teil der Luftstrecke, den die elektrischen Feldlinien durchlaufen, durch ihr höheres Dielektrikum ersetzen. Bilden sich z.B. beim Ablauf isolierender Medien Filme oder Schäume an der inneren Behälterwand des Behälters, in dem sich das Medium befindet, so sind diese meistens dünn gegenüber dem "kompakten" Füllstand, sodass eine genügend große Luftstrecke in dem Behälter verbleibt, weshalb diese Anhaftungen nicht erkannt werden und deshalb eine Anwendung zur Erfassung von Füllständen von isolierenden Medien nicht stören.

Anders verhält es sich bei elektrisch leitfähigen Medien. Hier liegen gänzlich andere physikalische Voraussetzungen vor. Es ist hier weniger das Dielektrikum, sondern die elektrische Leitfähigkeit ausschlaggebend. Kapazitive Näherungsschalter werden generell mit einer Wechselspannung bestimmter Frequenz betrieben. Hierdurch fließt automatisch ein Wechselstrom, der sogenannte Blindstrom, durch die Messkapazität, den Plattenkondensator bzw. das Medium. Erreicht nun der Füllstand in einem Behälter eines leitfähigen Mediums die Bedeckung einer aktiven Messelektrode auf der äußeren Behälterwand, so baut sich ein idealer Plattenkondensator auf, gebildet aus der Messelektrode als der einen Platte und dem Medium als der anderen Platte, welches aufgrund seiner Leitfähigkeit den Blindstrom direkt gegen Erde (z.B. über den Behälterboden) d.h. die Erdkapazität, ableitet (Strömungsfeld). Zwischen diesen "Platten" ist die Behälterwand, die das Dielektrikum bildet, angeordnet. Aufgrund dieser Konstellation des idealen Plattenkondensators wird eine relativ große Kapazitätserhöhung hervorgerufen, wenn der Füllstand bis in den Bereich der Elektrode steigt. Der Füllstand wird durch einen kapazitiven Näherungsschalter leicht erkannt. Große Probleme entstehen jedoch beim Absinken des Füllstandes, wenn das Medium einen geschlossenen Anhaftungsfilm oder Schaum an der Behälterwand hinterlässt. Dieser ist weiterhin elektrisch mit dem Medium verbunden. Er ist leitfähig und wirkt deshalb wie eine "undurchdringliche Platte", über die der Blindstrom abfließt. Dies führt dazu, dass ein an der Behälterwand angeordneter kapazitiver Füllstandssensor trotz abgesunkenen Füllstandes betätigt bleibt und insoweit falsche Angaben über die Füllstandshöhe liefert. Die Unterscheidung zwischen Anhaftungsfilm und realem Füllstand stellt ein häufiges Problem bei der kapazitiven Füllstandserfassung dar. Hieran scheitern sehr viele Anwendungen mit herkömmlichen kapazitiven Näherungsschaltern. Dabei spielt nicht nur die Neigung eines flüssigen Mediums zur Filmbildung eine Rolle, sondern auch die Rauhigkeit der Behälterwand durch Alterung, ständige Benutzung oder Verkalkung. Dies hat zur Folge, dass einige Füllstandserfassungsvorrichtungen erst nach einer gewissen Betriebszeit versagen und eine bestimmungsgemäße Füllstandserfassung dann nicht mehr möglich ist.

Um diesem Problem zu begegnen, wurden bei aus der DE 199 49 985 C2 sowie der DE 10 2005 057 558 A1 hervorgehenden Verfahren vorgeschlagen, den Blindwiderstand des vorgenannten Plattenkondensators durch höhere Arbeitsfrequenzen oder steile Impulsflanken zu minimieren. Hierdurch wird eine berührungslose Widerstandsunterscheidung ermöglicht und somit eine immer bessere Kompensation leitfähiger Anhaftungen erreicht. Der Grund dafür ist, dass durch die dünnere Struktur eines Anhaftungsfilmes den Elektronen ein kleineres Volumen zur Verfügung steht als im kompakten Medium. Hierdurch weist der Film einen größeren elektrischen Widerstand bzw. einen kleineren Leitwert auf als das kompakte Medium selbst.

Die vorstehend geschilderte Problematik nimmt zu mit dem Leitwert des Mediums sowie der Dicke des Anhaftungsfilms. So verursacht z.B. eine Anwendung mit einem Medium geringer Leitfähigkeit und großer Anhaftungsdicke die gleichen Probleme wie eine Anwendung mit einem Medium hoher Leitfähigkeit und einer geringen Filmdicke, die bis in den μm-Bereich hineinreichen kann. Dieses Problem besteht bei allen Sensoren und deshalb ist es ein Anliegen der Sensorhersteller, die Fähigkeiten ihrer Sensoren anhand von Zahlenwerten beschreiben zu können, um so gewissermaßen eine Klassifikation der Sensoren zu vermitteln und hierdurch wiederum Einsatzmöglichkeiten der kapazitiven Näherungssensoren aufzuzeigen. Problematisch ist es allerdings, dass normierte Messverfahren wie auch Kenngrößen zur eindeutigen Bestimmung dieser wesentlichen sensorischen Qualität bisher nicht existieren.

Der Erfindung liegt daher die Aufgabe zugrunde, eine Vorrichtung sowie ein Messverfahren zu vermitteln, die ein einfaches, schnelles und kostengünstiges Erfassen einer physikalischen Größe ermöglicht, welche die Fähigkeit eines kapazitiven Sensors charakterisiert, eine an einer Behälterwand, an der der Sensor zur Erfassung eines Flüssigkeitsstands in dem Behälter angeordnet ist, anhaftende dünne leitfähige Flüssigkeits- oder Schaumschicht nicht als Flüssigkeitstand in dem Behälter zu detektieren bzw. vom echten Vollzustand zu unterscheiden.

Diese Aufgabe wird gelöst durch die Merkmale der unabhängigen Ansprüche 1 und 8.

Grundidee der Erfindung ist es, den anhaftenden Feuchtigkeitsfilm durch einen einstellbaren Widerstand zu simulieren und einen eingestellten Widerstandswert auszulesen und diesen Wert als Maß der physikalischen Größe, die die Fähigkeit des kapazitiven Sensors charakterisiert, eine an einer Behälterwand anhaftende dünne Flüssigkeitsschicht nicht als Flüssigkeitsstand im Behälter zu detektieren, heranzuziehen. Hierdurch entfallen das umständliche Hantieren mit Flüssigkeiten, das Erstellen von langen Tabellen mit Messwerten, z.B. verschiedenen Leitwerten und Filmdicken und dergleichen. Die Vorrichtung und das Verfahren können bei allen kapazitiven Näherungsschaltern zum Einsatz kommen. Die gemessene Kenngröße ermöglicht den direkten Vergleich zwischen den verschiedenen kapazitiven Näherungsschaltern und eine Klassifizierung für das richtige Einsatzgebiet bzw. Medium.

Vorteilhafte Ausgestaltungen und Weiterbildungen des Verfahrens und der Vorrichtung sind Gegenstand der auf die unabhängigen Ansprüche jeweils rückbezogenen Unteransprüche.

So sieht beispielsweise eine vorteilhafte Ausgestaltung des Verfahrens vor, als Maß der physikalischen Größe, die die Fähigkeit des kapazitiven Sensors charakterisiert, eine an einer Behälterwand anhaftende dünne leitfähige Flüssigkeitsschicht nicht als Flüssigkeitsstand in dem Behälter zu detektieren, einen Leitwert heranzuziehen. Dieser Leitwert wird im Folgenden kurz als "Kompensationsleitwert" bezeichnet, wobei der Begriff "Kompensationsleitwert" die Eigenschaft des Sensor beschreibt, einen Film einer dünnen Flüssigkeitsschicht nicht als Flüssigkeitsstand in dem Behälter zu detektieren, also diese Flüssigkeitsanhaftung zu "kompensieren".

Die Anordnung zur Simulation des elektrischen Widerstands der dünnen Flüssigkeitsschicht weist einen einstellbaren Widerstand und eine an einem plattenförmigen Isolator angeordnete metallische Schicht auf, deren Fläche größer ist als die aktive Fläche des kapazitiven Näherungsschalters. Der eine Anschluss des einstellbaren Widerstands ist mit der metallischen Schicht über eine erste Leitung verbunden und der andere Anschluss des einstellbaren Widerstands ist mit dem Masseanschluss des kapazitiven Sensors über eine zweite Leitung verbunden. Die Fläche des plattenförmigen Isolators, die der metallischen Schicht abgewandt ist, bildet eine Auflagefläche für den verschieblich anordenbaren kapazitiven Sensor. Durch diese Anordnung ist die Simulation des elektrischen Widerstands der Flüssigkeitsschicht auf einfach zu realisierende und reproduzierbare Weise möglich.

Bevorzugt beträgt die Länge der ersten Leitung weniger als 2 cm und die Länge der zweiten Leitung weniger als 1 m. Der einstellbare Widerstand ist vorteilhafterweise ein Potentiometer.

Der plattenförmige Isolator wird auf sehr einfache Weise durch eine Plexiglasplatte mit einer Dicke im Bereich üblicher Behälterwandstärken, insbesondere 3 mm gebildet. Die metallische Schicht auf der Plexiglasplatte kann bevorzugt durch eine Kupferschicht realisiert werden, die eine sehr gute Leitfähigkeit aufweist. Diese metallische Schicht ist vorzugsweise rechteckförmig ausgebildet, insbesondere quadratisch, wobei die Kantenlänge des Quadrats größer ist als der Durchmesser der aktiven in der Regel kreisrunden Fläche des kapazitiven Sensors.

Weitere Vorteile und Merkmale der Erfindung sind Gegenstand der nachfolgenden Beschreibung sowie der zeichnerischen Darstellung von Ausführungsbeispielen. Hierbei können die verschiedenen Merkmale jeweils für sich oder in Kombination miteinander verwirklicht sein.

Kurze Beschreibung der Zeichnungen

In den Zeichnungen zeigen:

Fig. 1    das Prinzip der kapazitiven Füllstandsmessung von leitfähigen Medien in einem Behälter;

Fig. 2    eine kapazitive Füllstandsmessung leitfähiger Medien in einem Behälter bei Anhaftung eines Medienfilms an einer Behälterwand;

Fig. 3 schematisch die Verfahrensschritte zur Bestimmung des Kompensationsleitwertes mit Hilfe einer erfindungsgemäßen Vorrichtung.

Beschreibung von Ausführungsbeispielen

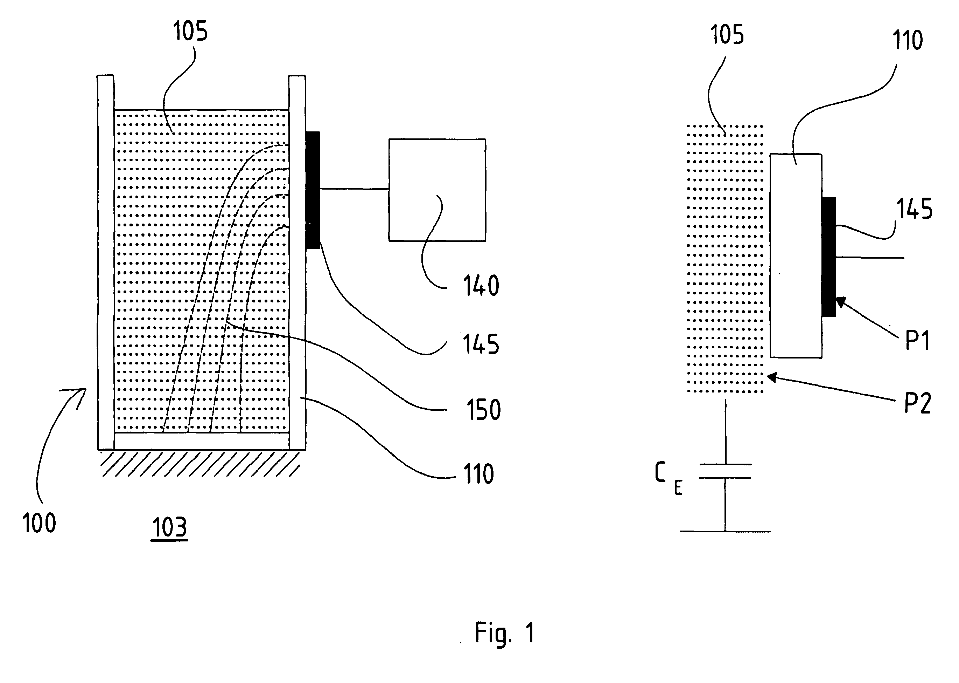

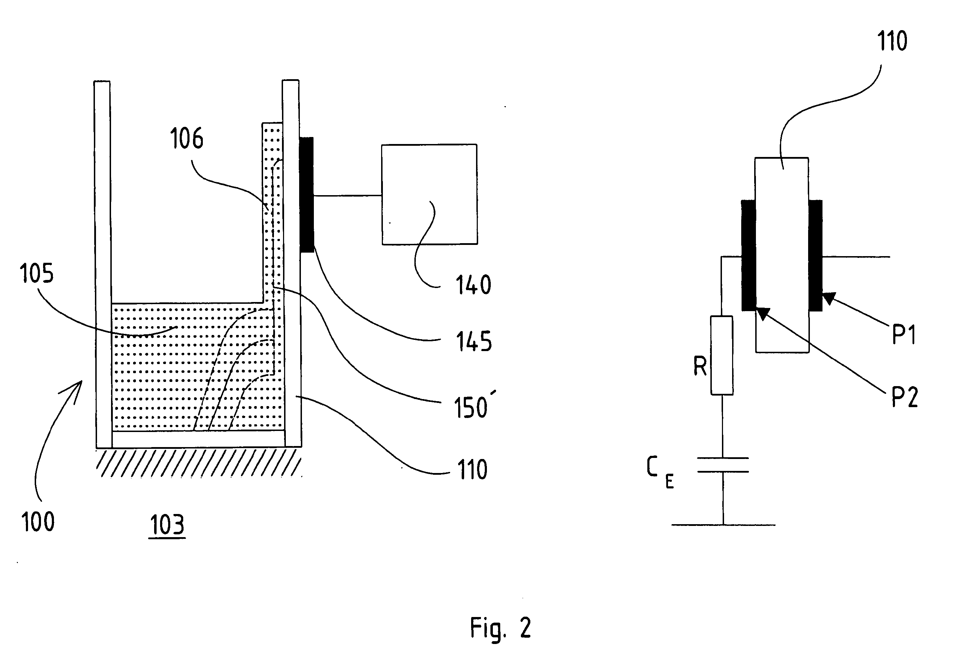

Nachfolgend wird das Messprinzip der kapazitiven Füllstandserfassung in Behältern mit leitfähigen Flüssigkeiten anhand der Fig. 1 und 2 erläutert, wobei gleiche Elemente in Fig. 1 sowie Fig. 2 mit jeweils den gleichen Bezugszeichen versehen sind.

In Fig. 1 und Fig. 2 ist schematisch ein Behälter 100 gezeigt, in dem sich ein flüssiges leitfähiges Medium 105 befindet. Der Behälter ist aus einem nichtleitenden Material hergestellt. An einer Behälterwand 110 ist ein kapazitiver Näherungsschalter 140 angeordnet, dessen Messelektrode 145 bündig an der Behälterwand 110 anliegt. Diese Messelektrode 145 bildet eine Platte P1 eines Kondensators, wobei die Behälterwand 110 des Behälters als Dielektrikum wirkt und die andere Platte P2 durch das Medium 105 gebildet wird. Über eine Erdkapazität $C_E$ ist dieser Plattenkondensator mit der Erde 103 verbunden. In dem Medium bildet sich ein Strömungsfeld 150 aus. Der kapazitive Näherungsschalter wird mit einer Wechselspannung bestimmter Frequenz betrieben. Hierdurch fließt ein sogenannter Blindstrom durch die Messkapazität, den Plattenkondensator bzw. das Medium. Erreicht in dem Behälter 100 der Füllstand des leitfähigen Mediums 105 die Bedeckung der aktiven Messelektrode 145 des kapazitiven Sensors 140, der an der äußeren Behälterwand 110 bündig anliegt, entspricht diese Anordnung einem idealen Plattenkondensator, wie er in Fig. 1 rechts dargestellt ist. Die eine Platte P1 ist die Messelektrode 145, die andere Platte P2 wird durch das Medium 105 selbst gebildet, weil es aufgrund seiner Leitfähigkeit den Blindstrom direkt gegen Erde, z.B. über den Behälterboden 103, ableitet (Strömungsfeld 150). Die Platten stehen sich geometrisch gegenüber, wobei das Dielektrikum, gebildet durch die Behälterwand 110 dazwischenliegend angeordnet ist. Aufgrund dieser Konstellation eines idealen Plattenkondensators erhält man eine relativ große Kapazitätserhöhung, wenn der Füllstand in den Bereich der Elektrode des Kapazitätssensors steigt. Der Füllstand wird so durch einen kapazitiven Näherungsschalter leicht erkannt. Probleme entstehen nun beim Absinken des Füllstandes, wenn das Medium einen geschlossenen Anhaftungsfilm oder Schaum an der Behälterwand hinterlässt, wie es anhand einer Anhaftung 106 in Fig. 2 links schematisch dargestellt ist. Der Anhaftungsfilm ist leitfähig und wirkt aus diesem Grunde wie eine "undurchdringliche Platte", über welche der Blindstrom abfließt, was anhand des Strömungsfeldes 150' schematisch in Fig. 2 angedeutet ist. Aufgrund dieser Anhaftungen scheitern eine Vielzahl von Anwendungen herkömmlicher kapazitiver Näherungsschalter. Hierbei spielt nicht nur die Neigung des flüssigen Mediums zur Filmbildung eine Rolle, sondern auch die Rauhigkeit der Behälterwand durch Alterung, ständige Benetzung oder Verkalkung. Da dies mit der Zeit zunehmende Erscheinungen sind, tritt bei einigen Füllstandserfassungsvorrichtungen ein Defekt in Form eines Ausfalls der Füllstandserfassung erst nach einer gewissen Zeit auf. Rein prinzipiell könnte nun dem Problem dadurch begegnet werden, dass ein größerer elektrischer Widerstand bzw. ein kleinerer Leitwert als das kompakte Medium durch eine Minimierung des Blindwiderstandes des Plattenkondensators mittels höherer Arbeitsfrequenzen oder steileren Impulsflanken vorgenommen wird, wodurch eine immer bessere Kompensation leitfähiger Anhaftungen erreicht werden kann, wie dies beispielsweise aus der DE 10 2005 057 558 A1 oder der DE 199 49 985 C2 hervorgeht, auf die insoweit verwiesen wird. Dies ist jedoch nicht unbegrenzt möglich. Das Problem kann hierdurch nicht gelöst werden, und es nimmt zu mit dem Leitwert des Mediums und der Dicke des Anhaftungsfilms. So verursacht z.B. die Messung des Flüssigkeitswerts mit einem Medium geringer Leitfähigkeit und großer Anhaftungsdicke die gleichen Probleme wie die Messung des Füllstands eines Mediums mit hoher Leitfähigkeit und einer geringen Filmdicke, die sogar im μm-Bereich liegen kann. Um kapazitive Füllstandssensoren zuverlässig einsetzen zu können, ist es erforderlich, eine Aussage über ihre Einsatzfähigkeit bei unterschiedlichen Medien zu treffen. Rein prinzipiell könnten hierzu eine Vielzahl von Messungen an unterschiedlichen Medien und die Aufnahme der Messwerte in entsprechende Datenblätter in Erwägung gezogen werden. Ein solches Verfahren ist jedoch zeitaufwendig, da eine Vielzahl von Versuchsreihen durchgeführt werden müssen. Problematisch ist, dass hierbei keine einheitliche Größe oder ein einheitlicher Standard eines derartigen Näherungsschalters angegeben werden kann.

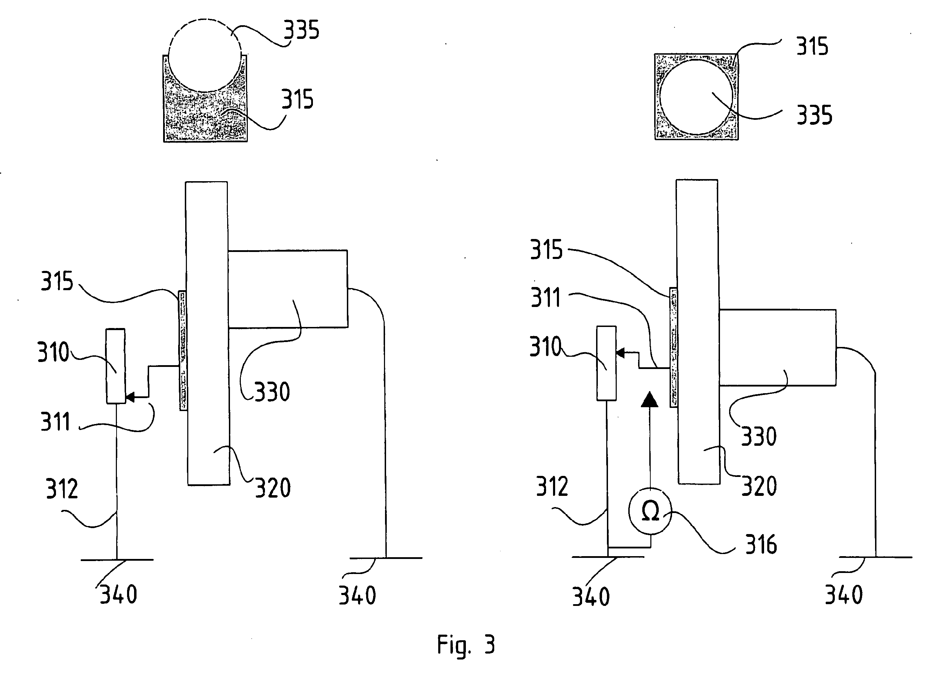

Die erfindungsgemäße Vorrichtung und das Verfahren ermöglichen die Angabe einer Größe, durch welche schnell und kostengünstig eine Aussage über die Eigenschaften eines kapazitiven Sensors getroffen werden kann, eine an einer Behälterwand, an der der Sensor zur Erfassung des Flüssigkeitsstands in dem Behälter angeordnet ist, anhaftende dünne leitfähige Flüssigkeitsschicht im Gegensatz zum echten Vollzustand nicht als Flüssigkeitsstand in dem Behälter zu detektieren. Hierdurch kann das umständliche Hantieren mit unterschiedlichen Flüssigkeiten und Erstellen von langen Tabellen mit Messwerten bei unterschiedlichen Filmdicken vermieden werden. Die Vorrichtung und das Verfahren werden nachfolgend in Verbindung mit Fig. 3 beschrieben.

In Fig. 3 ist eine Messanordnung gezeigt, umfassend einen einstellbaren Widerstand 310, eine Plexiglasplatte 320, an deren dem Sensor 330 abgewandten Seite eine metallische Schicht 315, beispielsweise eine Kupferschicht in Form eines Quadrats angeordnet ist. Der Widerstand 310 ist über eine erste sehr kurze Leitung 311 mit der metallischen Schicht 315 verbunden und er ist über eine weitere Leitung 312 mit dem Minus- oder Masseanschluss 340 verbunden. Der kapazitive Sensor 330 liegt mit seiner Messfläche 335 bündig an der Plexiglasplatte 320 an. Er ist ebenfalls über seinen Minus-Anschluss mit der Masse 340 verbunden.

Das erfindungsgemäße Verfahren wird nachfolgend in Verbindung mit Fig. 3 beschrieben, wobei ein Flüssigkeitsfilm, der an der Behälterwand 110 anhaftet, durch den einstellbaren Widerstand 310 simuliert wird. Zu bemerken ist noch, dass die metallische Schicht 315 beispielsweise in Form einer selbstklebenden Kupferfolie auf der Plexiglasscheibe 320 realisierbar ist. Die quadratische Fläche 315 der metallischen Schicht ist größer als die aktive kreisrunde Fläche 335 des kapazitiven Sensors 330. Generell muss sichergestellt sein, dass die Fläche der metallischen Schicht, die bevorzugt eine quadratische Fläche ist, etwas größer ist als die aktive Fläche des zu vermessenden Sensors, beispielsweise kann die Fläche bei einem Sensor der Bauform M30 35 mm x 35 mm betragen. Die erste Leitung 311, mit der die Fläche mit einem Anschluss des einstellbaren Widerstands 310 verbunden ist, muss möglichst kurz ausgebildet sein und insbesondere sollte sie kleiner als 2 cm sein. Die zweite Leitung, mit der der einstellbare Widerstand 310 mit dem Masseanschluss 340 des Prüflings, d.h. des zu vermessenden kapazitiven Sensors 330, verbunden ist, sollte ebenfalls möglichst kurz ausgebildet sein und ihre Länge sollte kleiner als 1 m sein. Der einstellbare Widerstand 310 ist beispielsweise ein Trimmpotentiometer oder ein Potentiometer mit Kunststoffachse. Das Bauteil sollte kapazitätsarm sein bzw. eine geringe Baugröße aufweisen.

Zur Bestimmung der physikalischen Messgröße, in diesem Fall des sogenannten Kompensationsleitwertes, wird zunächst der Widerstand 310 auf 0 Ohm bzw. Kurzschluss eingestellt. Der kapazitive Sensor wird so bündig an der der metallischen Schicht 315 abgewandten Seite der Plexiglasscheibe 320 verschoben und eingestellt, dass er genau bei halber Bedeckung der Metallfläche 315 schaltet. Der exakte Schaltpunkt kann dabei durch Hin- und Herschieben des Sensors 330 verifiziert werden. Dies ist schematisch in Fig. 3 links dargestellt. Sodann wird der kapazitive Sensor 330 so verschoben, dass seine aktive Fläche 335 durch die metallische Fläche 315 vollkommen überdeckt ist (in Fig. 3 rechts dargestellt). Der Sensor 330 ist nun dauerbetätigt. Nun wird der variable Widerstand 310 langsam vergrößert, bis der Sensor 330 in seine zweite Schaltposition übergeht, d.h. ausschaltet. Hierbei dürfen weder die Metallfläche 315 noch die Achse des Drehwiderstands 310 direkt berührt bzw. kapazitiv belastet werden. Es sollte daher das Potentiometer - wie bereits erwähnt - eine Kunststoffachse aufweisen oder es müsste mit Hilfe eines nichtmetallischen Schraubendrehers die Einstellung vorgenommen werden. Wenn ein Abschalten des Prüflings (Sensors 330) nicht erreicht werden kann, muss der Wert des einstellbaren Widerstands 310 vergrößert werden. Der eingestellte "Abschaltwert" des Widerstands 310, der Widerstandswert, an dem der kapazitive Sensor abschaltet, wird anschließend mit Hilfe beispielsweise eines an sich bekannten üblichen Ohmmeters 316 erfasst und ausgelesen. Dieser Widerstandswert ist ein Maß für die zu bestimmende physikalische Größe, die die Fähigkeit des kapazitiven Sensors 330 charakterisiert, eine an einer Behälterwand anhaftende dünne leitfähige Flüssigkeitsschicht nicht als Flüssigkeitsstand in dem Behälter zu detektieren. Eine einfache Lösung sieht dabei vor, den Kehrwert des "Abschaltwiderstands" zu verwenden und die so gewonnene Kenngröße, also den Leitwert in Siemens oder Millisiemens als sogenannten "Kompensationsleitwert" zu speichern. Dieser Kompensationsleitwert stellt eine Größe dar, welche die Eigenschaft des kapazitiven Sensors charakterisiert, einen anhaftenden Flüssigkeitsfilm zu kompensieren.

Es gilt also:

$$\text{Kompensationsleitwert} = 1/\text{Abschaltwiderstand}.$$

Die Fähigkeit eines kapazitiven Näherungsschalters, Anhaftungen, Filme und Schäume einer leitfähigen Flüssigkeit auf die beschriebene Weise kompensieren zu können, nimmt mit der Höhe des Kompensationsleitwertes zu.

So liegen die Kompensationsleitwerte herkömmlicher handelsüblicher kapazitiver Näherungsschalter der Bauformen M18 bis M30 im Bereich von ca. 10 $\mu$S bis 33 $\mu$S. Diese Werte entsprechen Kompensationsleitwerten, bei denen nicht einmal die Kompensation von Leitungswasser mit etwas Spülmittel möglich ist. Sensoren mit der aus der DE 199 49 985 C2 hervorgehenden sogenannten Smart-Level-Technologie erreichen dagegen schon Kompensationsleitwerte (KL-Werte) von 100 $\mu$S bis 700 $\mu$S. Damit sind seifige Wasserfilme einflusslos. Es können Füllstandsüberwachungen mit diversen Chemikalien wie Laugen, Säuren und dergleichen durchgeführt werden. Mit kapazitiven Füllstandsmeldern mit der sogenannten Impulstechnologie, wie sie aus der DE 10 2005 057 558 A1 hervorgehen und die KL-Werte bis zu 2000 $\mu$S erreichen, lassen sich sogar Flüssigkeitsstände von hochleitfähigen Chlorverbindungen bis 100 mS/cm trotz dünner Filmbildung erfassen.

Der KL-Wert repräsentiert zusammengefasst den Leitwert eines Anhaftungsfilmes, der von dem entsprechenden Füllstandsmelder noch kompensiert werden kann. Der Leitwert des zugehörigen, kompakten Arbeitsmediums (in S/cm) kann 10 bis 1000 mal höher liegen. "Kompaktes" Medium bedeutet dabei und in der gesamten obigen Darstellung ein Medium, welches das Behältnis bis zu einem Flüssigkeitsstand vollständig ausfüllt, d.h. ein gefülltes Behältnis. Unter der Voraussetzung gleicher, durchschnittlicher Filmdicken sind die Kompensationsleitwerte und der Leitwert des Arbeitsmediums miteinander verknüpft. Durch den KL-Wert kann der Anwender erstmals in Kenntnis des Leitwerts seines Arbeitsmediums den richtigen Füllstandsmelder auswählen. Als einfache Faustformel kann dabei gelten: KL-Wert · 100 = max. Leitwert des Arbeitsmediums.

Es ist an dieser Stelle zu bemerken, dass der KL-Wert als weitere Normgröße zur Charakterisierung von Füllstandsgebern in Form von kapazitiven Sensoren rein prinzipiell herangezogen werden kann.

**Patentansprüche**

1. Vorrichtung zur Bestimmung einer physikalischen Größe, welche die Fähigkeit eines kapazitiven Sensors oder Näherungsschalters (330) charakterisiert, eine an einer Behälterwand (320), an der der Sensor oder Näherungsschalter (330) zur Erfassung eines Flüssigkeitsstands in dem Behälter angeordnet ist, anhaftende dünne leitfähige Flüssigkeitsschicht nicht als Flüssigkeitsstand in dem Behälter zu detektieren, **gekennzeichnet durch** eine Anordnung zur Simulation des elektrischen Widerstands der dünnen Flüssigkeitsschicht mit einem einstellbaren Widerstand (310) und einer an einem plattenförmigen Isolator (320) angeordneten metallischen Schicht (315), deren Fläche größer ist als die aktive Fläche (335) des kapazitiven Sensors oder Näherungsschalters (330), wobei der eine Anschluss des einstellbaren Widerstands (310) mit der metallischen Schicht (315) über eine erste Leitung (311) verbunden ist, wobei der andere Anschluss des einstellbaren Widerstands (310) dazu eingerichtet ist, mit dem Masseanschluss (340) des kapazitiven Sensors oder Näherungsschalters (330) über eine zweite Leitung (312) verbunden zu werden, und wobei die Fläche des plattenförmigen Isolators (320), die der metallischen Schicht (315) abgewandt ist, eine Auflagefläche für den relativ zum plattenförmigen Isolator (320) verschieblich anordenbaren kapazitiven Sensor oder Näherungsschalter (330) bildet.

2. Vorrichtung nach Anspruch 1, **dadurch gekennzeichnet, dass** die Länge der ersten Leitung (311) weniger als 2 cm beträgt.

3. Vorrichtung nach Anspruch 1 oder 2, **dadurch gekennzeichnet, dass** die Länge der zweiten Leitung (312) weniger als 1 m beträgt.

4. Vorrichtung nach einem der vorstehenden Ansprüche, **dadurch gekennzeichnet, dass** der einstellbare Widerstand (310) ein Potentiometer ist.

5. Vorrichtung nach einem der vorstehenden Ansprüche, **dadurch gekennzeichnet, dass** der plattenförmige Isolator (320) eine Plexiglasplatte mit einer Dicke im Bereich üblicher Behälterwandstärken, insbesondere 3 mm, ist.

6. Vorrichtung nach einem der vorstehenden Ansprüche, **dadurch gekennzeichnet, dass** die metallische Schicht (315) eine Kupferschicht ist.

7. Vorrichtung nach Anspruch 6, **dadurch gekennzeichnet, dass** die metallische Schicht (315) eine rechteckförmige, insbesondere quadratische Fläche ausbildet, deren Kantenlänge größer ist als der Durchmesser der aktiven Fläche des kapazitiven Sensors oder Näherungsschalters (330).

8. Verfahren zur Bestimmung einer physikalischen Größe, welche die Fähigkeit eines kapazitiven Sensors oder Näherungsschalter (330) charakterisiert, eine an einer Behälterwand, an der der Sensor oder Näherungsschalter (330) zur Erfassung eines Flüssigkeitsstands in dem Behälter angeordnet ist, anhaftende dünne Flüssigkeitsschicht nicht als Flüssigkeitsstand in dem Behälter zu detektieren mit Hilfe einer Vorrichtung nach einem der vorstehenden Ansprüche, **gekennzeichnet durch** die folgenden Schritte:

   - der einstellbare Widerstand (310) wird auf einen Wert von 0 Ohm eingestellt,
   - die aktive Fläche (335) des kapazitiven Sensors oder Näherungsschalters (330) wird so bündig an dem plattenförmigen Isolator (320) auf seiner der metallischen Schicht abgewandten Seite angeordnet, dass nur eine vorgebbare Teilfläche des kapazitiven Sensors oder Näherungsschalters (330) die metallische Schicht (315) bedeckt,
   - der Schaltpunkt des kapazitiven Sensors oder Näherungsschalters (330) wird so eingestellt, dass der Sensor oder Näherungsschalter (330) seinen Schaltzustand wechselt,
   - der kapazitive Sensor oder Näherungsschalter (330) und/oder der plattenförmige Isolator (320) werden relativ zueinander bündig verschoben, bis die aktive Fläche (335) des kapazitiven Sensors oder Näherungsschalters (330) vollständig innerhalb der quadratischen metallischen Schicht (315) liegt,
   - der Widerstandswert des einstellbaren Widerstands (310) wird kontinuierlich so lange erhöht, bis der kapazitive Sensor oder Näherungsschalter (330) seinen Schaltzustand wechselt,

- der dabei eingestellte Widerstandswert wird ausgelesen und als ein Maß der physikalischen Größe herangezogen, die die Fähigkeit des kapazitiven Sensors oder Näherungsschalters (330) charakterisiert, eine an einer Behälterwand anhaftende dünne Flüssigkeitsschicht nicht als Flüssigkeitsstand in dem Behälter zu detektieren.

9. Verfahren nach Anspruch 8, **dadurch gekennzeichnet, dass** als vorgebbare Teilfläche des kapazitiven Sensors oder Näherungsschalters (330) die halbe aktive Sensorfläche (335) des kapazitiven Sensors oder Näherungsschalters (330) verwendet wird.

10. Verfahren nach Anspruch 8 oder 9, **dadurch gekennzeichnet, dass** die metallische Schicht (315) durch eine quadratische metallische Schicht, insbesondere eine quadratische Kupferschicht gebildet wird, deren Kantenlänge größer ist als der Durchmesser der aktiven Fläche (335) des kapazitiven Sensors oder Näherungsschalters (330).

**Claims**

1. An apparatus for determining a physical quantity which characterizes the capability of a capacitive sensor or proximity switch (330) to detect a thin conductive liquid layer adhering to a container wall (320), on which the sensor or the proximity switch (330) is arranged for detecting a liquid level in the container, not as a liquid level in the container, **characterized by** an arrangement for simulating the electrical resistance of the thin liquid layer with an adjustable resistor (310) and a metallic layer (315) arranged on a plate-shaped insulator (320), the area of said metallic layer being larger than the active area (335) of the capacitive sensor or proximity switch (330), wherein the one connection of the adjustable resistor (310) is connected to the metallic layer (315) via a first line (311), wherein the other connection of the adjustable resistor (310) is set up to be connected to the ground connection (340) of the capacitive sensor or proximity switch (330) via a second line (312), and wherein the area of the plate-shaped insulator (320) which faces away from the metallic layer (315) forms a support surface for the capacitive sensor or proximity switch (330) which can displaceably be arranged relative to the plate-shaped insulator (320).

2. An apparatus according to claim 1, **characterized in that** the length of the first line (311) is less than 2 cm.

3. An apparatus according to claim 1 or 2, **characterized in that** the length of the second line (312) is less than 1 m.

4. An apparatus according to one of the preceding claims, **characterized in that** the adjustable resistor (310) is a potentiometer.

5. An apparatus according to one of the preceding claims, **characterized in that** the plate-shaped insulator (320) is a plexiglass plate with a thickness in the range of conventional container wall thicknesses, especially 3 mm.

6. An apparatus according to one of the preceding claims, **characterized in that** the metallic layer (315) is a copper layer.

7. An apparatus according to claim 6, **characterized in that** the metallic layer (315) forms a rectangular, especially square, area, whose edge length is greater than the diameter of the active area of the capacitive sensor or proximity switch (330).

8. A method for determining a physical quantity which characterizes the capability of a capacitive sensor or a proximity switch (330) to detect a thin conductive liquid layer, which adheres to a container wall (320) on which the sensor or the proximity switch (330) is arranged for detecting a liquid level in the container, not as a liquid level in the container by means of an apparatus according to one of the preceding claims, **characterized by** the following steps:

   - the adjustable resistor (310) is set to a value of 0 ohms;
   - the active area (335) of the capacitive sensor or proximity switch (330) is arranged in a flush manner on the plate-shaped insulator (320) on its side facing away from the metallic layer in such a way that only a predeterminable partial area of the capacitive sensor or proximity switch (330) covers the metallic layer (315);
   - the switching point of the capacitive sensor or proximity switch (330) is set in such a way that the sensor or proximity switch (30) changes its switching state;
   - the capacitive sensor or proximity switch (330) and/or the plate-shaped insulator (320) are displaced in a flush manner relative to one another until the active area (335) of the capacitive sensor or proximity switch (330) lies completely within the square metallic layer (315);
   - the resistance value of the adjustable resistor (310) is increased continuously for such a time until the capacitive sensor or proximity switch (330) changes its switching state;

- the resistance value set thereby is readout and is used as a measure of the physical quantity which characterizes the capability of the capacitive sensor or proximity switch (330) to detect a thin liquid layer adhering to the container wall not as a liquid level in the container.

9. A method according to claim 8, **characterized in that** half the active sensor area (335) of the capacitive sensor or proximity switch (330) is used as the predeterminable partial area of the capacitive sensor or proximity switch (330).

10. A method according to claim 8 or 9, **characterized in that** the metallic layer (315) is formed by a square metallic layer, especially a square copper layer, whose edge length is greater than the diameter of the active area (335) of the capacitive sensor or proximity switch (330).


**Revendications**

1. Dispositif permettant de déterminer une grandeur physique qui caractérise l'aptitude d'un capteur ou d'un détecteur de proximité capacitif (330) à détecter une mince couche de liquide conductrice, ne se trouvant pas au niveau de liquide dans le réservoir, adhérente sur une paroi de ce réservoir (320) sur laquelle le capteur ou le détecteur de proximité (330) est positionné pour détecter un niveau du liquide dans le réservoir,
   **caractérisé par** un
   dispositif de simulation de la résistance électrique de la mince couche de liquide équipé d'une résistance réglable (310) et d'une couche métallique (315) située sur un isolant en forme de plaque (320) dont la surface est supérieure à la surface active (335) du capteur ou du détecteur de proximité capacitif (330), l'une des bornes de la résistance réglable (310) étant reliée à la couche métallique (315) par une première conduite (311) et l'autre borne de la résistance réglable (310) étant réalisée pour être reliée à la borne de masse (340) du capteur ou du détecteur de proximité capacitif (330) par une seconde conduite (312), et la surface de l'isolateur en forme de plaque (320) qui est située à l'opposé de la couche métallique (315) formant une surface d'appui pour le capteur ou le détecteur de proximité capacitif (330) pouvant être positionné mobile en translation par rapport à l'isolateur en forme de plaque (320).

2. Dispositif conforme à la revendication 1,
   **caractérisé en ce que**
   la longueur de la première conduite (311) est inférieure à 2 cm.

3. Dispositif conforme à la revendication 1 ou 2,
   **caractérisé en ce que**
   la longueur de la seconde conduite (312) est inférieure à 1 m.

4. Dispositif conforme à l'une des revendications précédentes,
   **caractérisé en ce que**
   la résistance réglable (310) est un potentiomètre.

5. Dispositif conforme à l'une des revendications précédentes,
   **caractérisé en ce que**
   l'isolateur en forme de plaque (320) est une plaque en plexiglas ayant une épaisseur située dans la plage des épaisseurs usuelle des parois de réservoir, en particulier de 3 mm.

6. Dispositif conforme à l'une des revendications précédentes,
   **caractérisé en ce que**
   la couche métallique (315) est une couche de cuivre.

7. Dispositif conforme à la revendication 6,
   **caractérisé en ce que**
   la couche métallique (315) forme une surface rectangulaire en particulier carrée dont la longueur des côtés est supérieure au diamètre de la surface active du capteur ou du détecteur de proximité capacitif (330).

8. Procédé permettant de déterminer une grandeur physique qui caractérise l'aptitude d'un capteur ou d'un détecteur de proximité capacitif (330) à détecter une mince couche de liquide conductrice ne se trouvant pas au niveau du liquide dans un réservoir, adhérente sur une paroi de ce réservoir sur laquelle est positionné le capteur ou le détecteur de proximité (330) pour détecter un niveau de liquide dans le réservoir, à l'aide d'un dispositif conforme à l'une des revendications précédentes, comprenant les étapes suivantes :

- la résistance réglable (310) est réglée à la valeur de 0 Ohm,
- la surface active (335) du capteur ou du détecteur de proximité capacitif (330) est intimement appliqué sur l'isolateur en forme de plaque (320), sur sa face située à l'opposée de la couche métallique, de sorte que seule une surface partielle pouvant être prédéfinie du capteur ou du détecteur de proximité capacitif (330) recouvre la couche métallique (315),
- le point de contact de commutation du capteur ou du détecteur de proximité capacitif (330) est réglé de sorte que le capteur ou le commutateur de proximité (330) change d'état de commutation,
- le capteur ou le détecteur de proximité capacitif (330) et/ou l'isolateur en forme de plaque (320) sont déplacés en alignement l'un par rapport à l'autre jusqu'à ce que la surface active (335) du capteur ou du détecteur de proximité capacitif (330) soit entièrement située à l'intérieur de la couche métallique carrée (315),
- la valeur de la résistance réglable (310) est augmentée de manière continue jusqu'à ce que le capteur ou le détecteur de proximité capacitif (330) change d'état de commutation,
- la valeur de la résistance ainsi réglée est lue, et utilisée comme mesure de la grandeur physique qui caractérise l'aptitude du capteur ou du détecteur de proximité capacitif (330) à détecter une mince couche de liquide ne se trouvant pas au niveau du liquide dans le réservoir, adhérente sur une paroi du réservoir.

9. Procédé conforme à la revendication 8,
   **caractérisé en ce qu'**
   en tant que surface partielle pouvant être prédéfinie du capteur ou du détecteur de proximité capacitif (330) on utilise la moitié de la surface de capteur active (335) du capteur ou du détecteur de proximité capacitif (330).

10. Procédé conforme à la revendication 8 ou 9,
    **caractérisé en ce que**
    la couche métallique (315) est formée par une couche métallique carrée, en particulier par une couche de cuivre carrée dont la longueur des côtés est supérieure au diamètre de la surface active (335) du capteur ou du détecteur de proximité capacitif (330).

Fig. 1

EP 2 459 974 B1

Fig. 2

EP 2 459 974 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10250523 A1
- DE 19949985 C2
- DE 102005057558 A1